Europäisches Patentamt

European Patent Office

Office européen des brevets

(11) Numéro de publication: **0 399 873**
**A1**

## (12) DEMANDE DE BREVET EUROPEEN

(21) Numéro de dépôt: **90401277.0**

(22) Date de dépôt: **15.05.90**

(51) Int. Cl.5: **H01S 3/02**

(30) Priorité: **19.05.89 FR 8906546**

(43) Date de publication de la demande:
**28.11.90 Bulletin 90/48**

(84) Etats contractants désignés:
**BE CH DE FR GB IT LI NL SE**

(71) Demandeur: **A L M**
**52, avenue Lénine**
**F-93230 Romainville(FR)**

(72) Inventeur: **Villain, Claude**
**22, allée de Champereau, Chevry .**
**F-91190 Gif-Sur-Yvette(FR)**

(74) Mandataire: **Le Moenner, Gabriel**
**L'AIR LIQUIDE, Société Anonyme pour**
**l'etude et l'exploitation des procédés**
**Georges Claude 75, Quai d'Orsay**
**F-75321 Paris Cédex 07(FR)**

(54) **Support réglable pour tube laser à gaz et appareil à laser équipé d'un tel support.**

(57) Un support réglable pour tube laser à gaz comprenant deux bagues rigides (11,12) rendues solidaires du tube laser (1) à l'aide des joints souples (13,14) formés dans l'espace annulaire entre la face interne des bagues et la paroi du tube; une structure rigide (2) disposée autour du tube et munie de moyens de réglage (20,21,23) coopérant directement avec ces bagues, de façon à pouvoir ajuster la direction du faisceau laser par rapport à l'axe optique.

FIG.1

EP 0 399 873 A1

## Support réglable pour tube laser à gaz et appareil à laser équipé d'un tel support.

La présente invention concerne un support réglable pour tube laser à gaz équipant notamment un appareil à laser destiné à des utilisations médicales.

Dans le domaine médical, en particulier en thérapie chirurgicale moyenne comme la dermatologie, l'urologie, la gynécologie et la chirurgie plastique, l'utilisation d'un appareil à laser $CO_2$ est d'une pratique courante.

Un tel appareil délivre, à l'extrémité libre d'un bras optique, un faisceau laser invisible de longueur d'onde égale à 10,6 $\mu$m et de puissance ajustable de 4 à 25 watts générée par un tube laser. Un faisceau laser rouge HeNe, coaxial au faisceau laser $CO_2$, visualise au préalable l'impact sur le tissu à traiter.

La coaxialité entre le faisceau laser de visée (HeNe) et le faisceau laser de traitement ($CO_2$) à la sortie du bras optique est un facteur primordial pour la précision et donc la réussite des opérations.

Il faut alors parfaitement centrer le tube laser $CO_2$ dans un support fixe à l'intérieur de l'appareil. Jusqu'à présent, le centrage du tube est réalisé à l'aide de deux bagues montées solidairement autour du tube et espacées l'une de l'autre. L'ensemble formé par le tube et les bagues de centrage est amovible et est positionné dans l'appareil.

Il est à remarquer que le centrage du tube est principalement déterminé par la précision de montage des bagues de centrage. Une fois les bagues montées et l'ensemble positionné dans l'appareil, il n'est pas possible d'ajuster le tube laser et donc le faisceau laser $CO_2$.

En outre, afin d'assurer le bon fonctionnement du tube laser, il doit être périodiquement changé et retourné en usine pour rénovation et maintenance. Cela implique de nombreuses et délicates opérations de montage et de réglage optique lors d'un changement de tube laser et nécessite un temps d'intervention relativement long.

La présente invention a pour objet de remédier aux inconvénients mentionnés ci-dessus en réalisant un nouveau type de support permettant de régler facilement le centrage du tube laser.

Un autre objet de l'invention est de fournir un appareil à laser pour application médicale dont on puisse régler facilement et à tout moment la coaxialité du faisceau laser de visée et du faisceau laser de traitement.

L'invention a également pour but de remplacer la technique antérieure, qui nécessite des tolérances très restrictives d'usinage de bagues et de leur assemblage, par une technique nouvelle selon laquelle lesdites tolérances peuvent être moins restrictives. Cela réduit considérablement le coût de fabrication et d'entretien des tubes laser.

L'invention a en outre pour objet un support réglable pour tube laser interchangeable et sans reprise d'alignement optique lors de la maintenance de l'appareil à laser.

Selon la présente invention, le support réglable pour tube laser comprend deux bagues rigides coaxiales au tube laser et espacées l'une de l'autre, chaque bague étant rendue solidaire du tube à l'aide d'un joint souple formé dans l'espace annulaire entre la face interne de la bague et la paroi du tube; une structure rigide est en outre disposée autour du tube et munie d'une ouverture circulaire pour le passage d'un faisceau laser généré dans le tube. Cette structure rigide comporte des moyens de réglage coopérant directement avec les bagues, de façon à pouvoir ajuster la direction du faisceau laser par rapport à l'axe de l'ouverture circulaire.

Selon un mode de réalisation préféré de l'invention, les joints souples entre la face interne des bagues rigides et la paroi du tube, sont constitués par une matière adhésive thermoplastique.

Les espaces annulaires pour recevoir les joints souples présentent de préférence une dimension radiale comprise entre 2 mm et 6 mm, de façon à pouvoir ajuster le tube à l'aide de l'élasticité des joints souples sans qu'ils deviennent une source d'imprécision.

Selon un mode avantageux de réalisation de l'invention, la structure rigide comprend une plaque de fixation sur laquelle est pratiquée ladite ouverture circulaire prise comme référence pour le faisceau laser; deux couronnes rigides de réglage coopérant chacune avec une desdites bagues; et plusieurs tiges rigides parallèles au tube et reliant entre elles les couronnes de réglage et la plaque de fixation. Les tiges peuvent être avantageusement réparties régulièrement autour du tube laser.

De préférence, au moins une desdites couronnes de réglage est munie de vis et ou ressorts de réglage régulièrement répartis sur la couronne et capables d'exercer un effort radial sur le pourtour de la bague correspondante. La couronne proche de la plaque de fixation peut être montée de façon adjacente à la bague correspondante qui présente un diamètre inférieur à celui de la couronne et des évidements sur son pourtour, évitant le contact entre la bague et les tiges rigides de la structure. La bague peut alors glisser transversalement par rapport à la couronne, entraînant ainsi un déplacement transversal du tube laser.

La couronne éloignée de la plaque de fixation peut être disposée coaxialement autour de la bague correspondante avec des vis de réglage traversant radialement la couronne pour venir en contact avec le pourtour de la bague correspondante.

Grâce à l'élasticité des joints souples et au montage de la structure rigide, il devient facile de procéder à tout moment au réglage en alignement du faisceau laser par rapport à l'axe de l'ouverture circulaire.

L'appareil à laser classique peut, par une modification mineure, être équipé du support réglable de l'invention. Dans ce cas, la coaxialité du faisceau laser de traitement et du faisceau laser de visée peut être réglée in situ.

L'invention sera mieux comprise à l'étude de la description détaillée d'un exemple de réalisation pris à titre nullement limitatif et illustré dans les dessins annexés, sur lesquels :

la figure 1 est une vue de côté schématisée avec arrachements partiels d'un support réglable pour tube laser selon l'invention;

la figure 2 est une vue en coupe selon II-II de la figure 1; et

la figure 3 est une vue en coupe selon III-III de la figure 1.

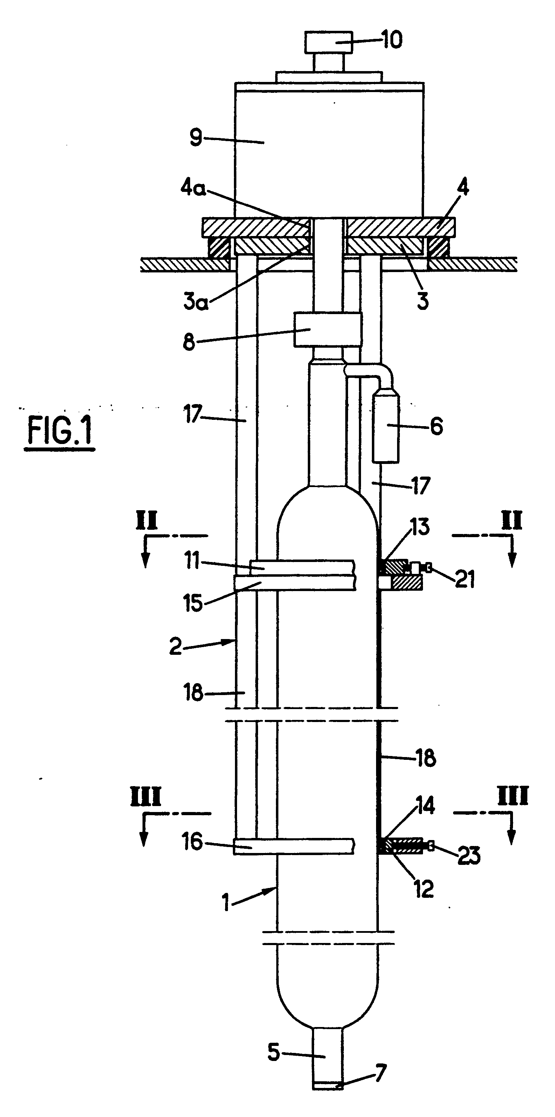

Tel qu'il est illustré sur les figures, le support réglable pour tube laser, selon l'invention, comprend un tube laser 1 à gaz et une structure rigide 2 montée autour du tube laser et disposée verticalement sur la figure 1. La structure rigide 2 présente une plaque supérieure de fixation 3 permettant le montage de l'ensemble formé par le tube laser 1 et la structure rigide 2 sur une plaque de base 4 faisant partie du châssis fixe de l'appareil à laser. Ce montage est réalisé de façon amovible à l'aide, par exemple, de vis de fixation non représentées sur la figure.

Le faisceau laser, généré à l'intérieur du tube laser 1 entre une anode 5 et une cathode 6, est orienté à l'aide des miroirs 7 et 8, traverse longitudinalement le tube 1 et sort par une ouverture centrale 3a de la plaque de fixation 3 et une ouverture 4a de la base 4 pour entrer dans un dispositif 9 de traitement du faisceau laser. Le faisceau laser traité et le faisceau laser de visée issus du dispositif de traitement 9, sont dirigés vers une embase 10 de montage pour un bras optique (non représenté) qui permet, par exemple, un traitement thérapeutique.

Autour du tube laser 1 sont disposées coaxialement deux bagues supérieure 11 et inférieure 12. Chaque bague 11, 12 est rendue solidaire du tube laser 1 par l'intermédiaire d'un joint souple 13,14.

La structure rigide 2 comporte une couronne supérieure 15, une couronne inférieure 16, toutes deux de diamètres supérieurs à ceux des bagues 11,12, trois tiges rigides supérieures 17 et trois tiges rigides inférieures 18. Les tiges supérieures 17, sensiblement parallèles à l'axe du tube 1, sont disposées autour du tube à 120° l'une de l'autre pour solidariser la plaque de fixation 3 avec la couronne supérieure 15. Il en est de même pour les tiges inférieures 18 reliant entre elles les couronnes 15 et 16.

Dans cet exemple de réalisation, la bague supérieure 11 est adjacente de la couronne supérieure 15. La bague inférieure 12 est montée concentriquement à l'intérieur de la couronne inférieure 16. Chaque couronne 15,16 est munie de moyens de réglage coopérant directement avec le pourtour de la bague correspondante 11,12 qui, grâce à l'élasticité du joint souple 13,14, agit sur le tube laser 1, de façon à régler la direction du faisceau laser à la sortie de l'ouverture 3a de la plaque de fixation 3.

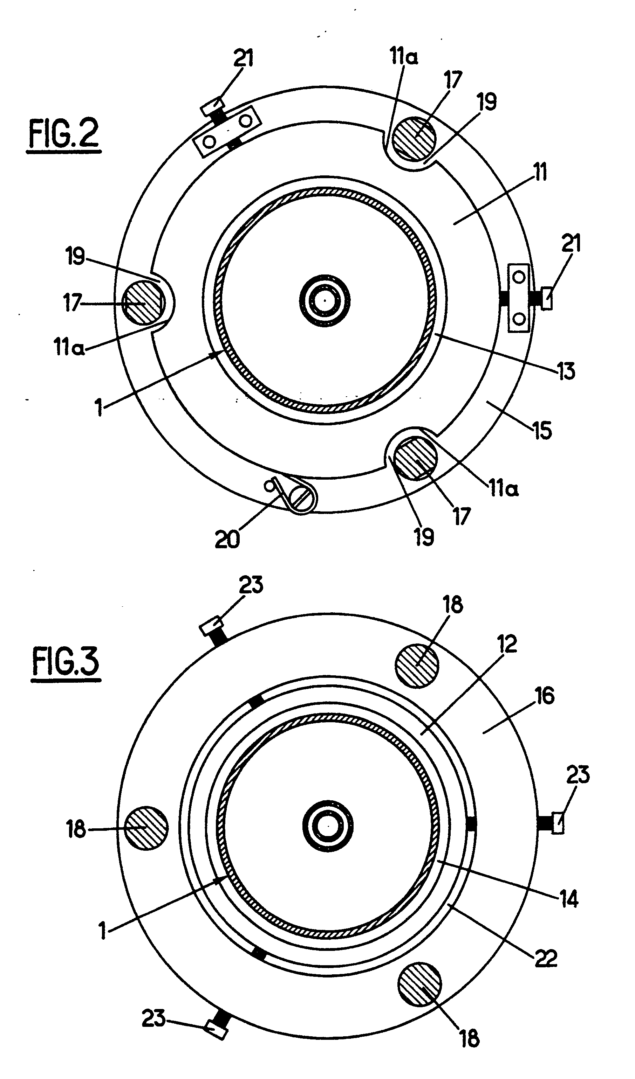

Comme on peut le voir sur la figure 2, la bague supérieure 11 est rendue solidaire au tube laser 1 par l'intermédiaire du joint souple 13 qui est formé, selon l'invention, par une matière adhésive thermoplastique ou un joint en matière plastique souple collé sur la paroi du tube 1 et sur la face interne de la bague 11. La souplesse du joint 13 permet, d'une part, d'amortir les efforts exercés sur le tube en verre, et d'autre part, un léger déplacement angulaire du tube laser par rapport à l'axe de la bague 11.

En-dessous de la bague 11 est placée de façon adjacente la couronne supérieure 15 sur laquelle sont montées les tiges rigides supérieures 17. Sur le pourtour de la bague 11 sont pratiqués des évidements semi-circulaires 11a face aux tiges rigides 17 en laissant subsister un espace 19.

Grâce aux espaces 19 séparant les tiges rigides 17 et les évidements 11a, la bague 11 peut se déplacer dans le plan radial par rapport à la couronne 15, ce qui a pour effet de permettre un déplacement radial du tube laser 1 par rapport à la couronne 15.

Sur la face supérieure de la couronne 15, sont montés un ressort de réglage 20 et deux vis de réglage 21, répartis respectivement de façon sensiblement régulière sur la couronne 15. Les vis 21 et le ressort 20 exercent chacun un effort radial sur le pourtour de la bague 11, afin de régler la position, dans le plan radial, du tube laser 1 par rapport à la couronne 15. On peut également remplacer le ressort de réglage 20 par une vis semblable aux vis 21.

Pour ce qui est du réglage par la couronne inférieure 16, on se référera à la figure 3. La bague inférieure 12 présente un diamètre extérieur inférieur à celui de la bague supérieure 11. Le montage de la bague 12 autour du tube laser 1 par l'intermédiaire du joint souple 14 s'effectue de manière pratiquement identique au montage de la bague supérieure 11. Autour de la bague 12 est montée la couronne inférieure 16 dont le diamètre intérieur est supérieur au diamètre extérieur de la bague 12, de façon à former un espace annulaire 22 entre la bague 12 et la couronne 16. La couronne inférieure 16 est rendue solidaire de la couronne supérieure 15 par l'intermédiaire des tiges rigides 18. Sur le pourtour de la couronne 16, sont pratiqués trois alésages radiaux filetés traversant la couronne. Ces alésages sont répartis à 120° l'un de l'autre et reçoivent chacun une vis de réglage 23. Les vis 23 exercent chacune un effort radial sur le pourtour de la bague inférieure 12. Grâce à l'espace annulaire 22 formé entre le pourtour de la bague inférieure 12 et la face interne de la couronne inférieure 16, le tube laser 1 peut se déplacer dans le plan radial par rapport à la couronne inférieure 16, à l'aide des vis de réglage 23. Les contraintes mécaniques subies par le tube laser 1 sont considérablement réduites grâce au joint souple 14.

On voit que le support de l'invention permet aisément de régler la direction du tube laser 1 par rapport à la structure rigide 2 qui peut être rendue solidaire d'une base de référence de châssis. L'élasticité des joints souples 13,14 et les liaisons mécaniques entre les bagues 11,12 et les couronnes 15,16 munies de moyens de réglage 20,21 et 23, permettent un réglage rapide et précis du tube laser 1. De plus, le support réglable est facile à monter et démonter dans l'appareil à laser et permet donc une grande interchangeabilité. La structure rigide 2 coaxiale au tube laser 1 avec les tiges rigides 17,18 régulièrement réparties autour du tube, permet de réduire les effets de dilatation thermique lorsque l'appareil fonctionne, évitant ainsi un déréglage optique indésirable.

En pratique, le réglage au niveau de la bague supérieure 11 agit principalement sur le centrage du faisceau laser et le réglage de la bague inférieure 12, principalement sur l'orientation du faisceau laser. Les deux réglages réagissant l'un sur l'autre, il est préférable de passer plusieurs fois de l'un à l'autre pour mettre le faisceau laser exactement sur l'axe optique désiré.

Il est à remarquer que la forte épaisseur des joints souples 13,14 est nécessaire, d'une part, pour absorber les contraintes appliquées au tube laser 1 et, d'autre part, pour permettre le déplacement relatif entre le tube laser et la structure rigide. Il est recommandé, selon l'invention, d'avoir une épaisseur de joint souple comprise entre 2 mm et 6 mm. Dans l'exemple représenté, cette épaisseur est égale à environ 4 mm. Un autre point important à souligner est que les épaisseurs des joints supérieurs 13 et inférieurs 14 peuvent ne pas être identiques.

Le support réglable pour tube laser de l'invention peut être utilisé pour tout organe qui nécessite pour sa mise au point un réglage d'orientation de petite amplitude, tel que laser HeNe d'alignement, tube laser $CO_2$ à flux de gaz, lunette de visée ...

## Revendications

1. Support réglable pour tube laser, comprenant deux bagues rigides (11, 12) coaxiales au tube (1) et espacées l'une de l'autre, un joint souple (13, 14) étant disposé dans l'espace annulaire entre la face interne de la bague et la paroi du tube ; une structure rigide (2) disposée autour du tube et munie d'une ouverture circulaire (3a) pour le passage d'un faisceau laser généré dans le tube, la structure comportant des moyens de réglage (20, 21, 23) coopérant directement avec les bagues, de façon à pouvoir ajuster la direction du faisceau laser par rapport à l'axe de l'ouverture circulaire, caractérisé par le fait que la structure rigide (2) comprend une plaque de fixation (3), comportant l'ouverture circulaire (3a), et destinée à être montée sur un châssis (4), deux couronnes rigides de réglage (15, 16) coopérant chacune avec une des bagues (11, 12), et au moins deux tiges rigides (17, 18) parallèles au tube et reliant solidairement les couronnes à la plaque, et en ce que chaque bague (11, 12) est rendue solidaire du tube laser (1) par son joint souple associé (13, 14).

2. Support réglable selon la revendication 1, caractérisé par le fait que les joints souples (13, 14) sont constitués par une matière souple thermoplastique remplissant lesdits espaces annulaires correspondants et adhérant au tube laser (1) et à la bague associée (11, 12).

3. Support réglable selon la revendication 1 ou 2, caractérisé par le fait que les joints souples (13, 14) présentent une épaisseur comprise entre 2 et 6 mm.

4. Support réglable selon l'une des revendications 1 à 3, caractérisé par le fait qu'au moins une des couronnes de réglage (15, 16) est munie de vis et/ou ressorts de réglage (20, 21, 23) régulièrement répartis sur la couronne et exerçant chacun un effort radial sur le pourtour de la bague correspondante (11, 12).

5. Support réglable selon la revendication 4, caractérisé par le fait que la couronne de réglage (15) proche de la plaque de fixation (3) est disposée de façon adjacente à la bague correspondante (11) dont le diamètre est inférieur à celui de la couronne et dont le pourtour est muni d'évidements (11a), de façon à pouvoir éviter le contact mécanique entre la bague et les tiges rigides (17) parallèles au tube.

6. Support réglage selon l'une des revendications 4 et 5, caractérisé par le fait que la couronne de réglage (16) éloignée de la plaque de fixation (3) est disposée coaxialement autour de la bague correspondante (12), les vis de réglage (23) traversant radialement la couronne pour venir en contact avec le pourtour de la bague.

7. Appareil à laser comprenant un tube laser et des moyens d'acheminement d'un faisceau laser généré par le tube laser vers un dispositif de sortie du faisceau laser, caractérisé par le fait qu'il est équipé d'un support réglable pour tube laser selon l'une quelconque des revendications précédentes.

8. Appareil à laser selon la revendication 7, caractérisé par le fait qu'il est du type à laser $CO_2$ pour utilisation médicale.

FIG.1

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 617 926 (H.W. BULLINGER)<br>* Colonne 2, lignes 33-57; figures 1-5 *<br>--- | 1-3,7 | H 01 S 3/02 |
| Y | FR-A-1 576 928 (SIEMENS)<br>* Page 3, lignes 9-22; figures 1,2 *<br>--- | 1-3,7 | |
| Y | US-A-3 847 703 (KAISER)<br>* Résumé; figures 1-4 *<br>--- | 2,3 | |
| Y | US-A-3 603 691 (HAMILTON)<br>* Colonne 4, lignes 51-69; figure 5 *<br>----- | 1-3,7 | |

| | DOMAINES TECHNIQUES RECHERCHES (Int. Cl.5) |
|---|---|
| | H 01 S |

Le présent rapport a été établi pour toutes les revendications

| Lieu de la recherche | Date d'achèvement de la recherche | Examinateur |
|---|---|---|
| LA HAYE | 27-06-1990 | MALIC K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)